# EUROPEAN PATENT SPECIFICATION

(11) **EP 0 323 130 B1**
(45) Date of publication and mention of the grant of the patent: **21.07.1993**
(21) Application number: 88312166.7
(22) Date of filing: 22.12.1988
(51) Int. Cl.: A61B 10/00, G01N 1/30

(54) **Automatic staining apparatus for slide specimens**
Gerät für das automatische Färben von Schnittproben
Appareil automatique de coloration pour spécimens en tranche

(30) Priority: 28.12.1987 JP 334925/87; 28.12.1987 JP 334926/87
(43) Date of publication of application: 05.07.1989
(73) Proprietor: Tabata, Yoshio, Tokyo (JP); SHIRAIMATSU & CO. LTD., Osaka-shi Osaka (JP)
(72) Inventor: Tabata, Yoshio, Tokyo (JP)
(74) Representative: Gillam, Francis Cyril

(56) References cited:
- GB-A- 1 453 226
- US-A- 4 269 803
- US-A- 4 651 671

## Description

This invention relates to an automatic staining apparatus used in the staining step of slide specimens such as tissue specimens, cytodiagnostic specimens, and the like. More particularly, the present invention relates to a clamp member for the automatic staining apparatus and a slide holder basket which engages the clamp member and stores therein glass slide specimens.

Slide specimens such as tissue specimens, cytodiagnostic specimens, and the like, are prepared by the following steps:
(1) A step of cutting the tissue or the like into a slice, extending the slice uniformly on a glass slide to bring the slice into close contact with the glass, thus preparing the primary slide specimen.
(2) A step of staining the primary slide specimen with a specified chemical solution such as hematoxylin solution, eosin solution, Papanicolaou solution, May-Giemsa solution, or Wright-Giemsa solution in accordance with the object of the slide specimen, to prepare a secondary slide specimen.
   Table 1 below shows the typical procedures of H.E. (hematoxylin-eosin) staining of human tissue specimens.
(3) A sealing step of causing an ordinary sealing medium to flow on the cell, tissue, etc. of the secondary slide specimen prepared in the staining step, and putting a cover glass thereon to prepare a final slide glass specimen.

An example of a conventional staining apparatus is given in GB-A- 1 453 226.

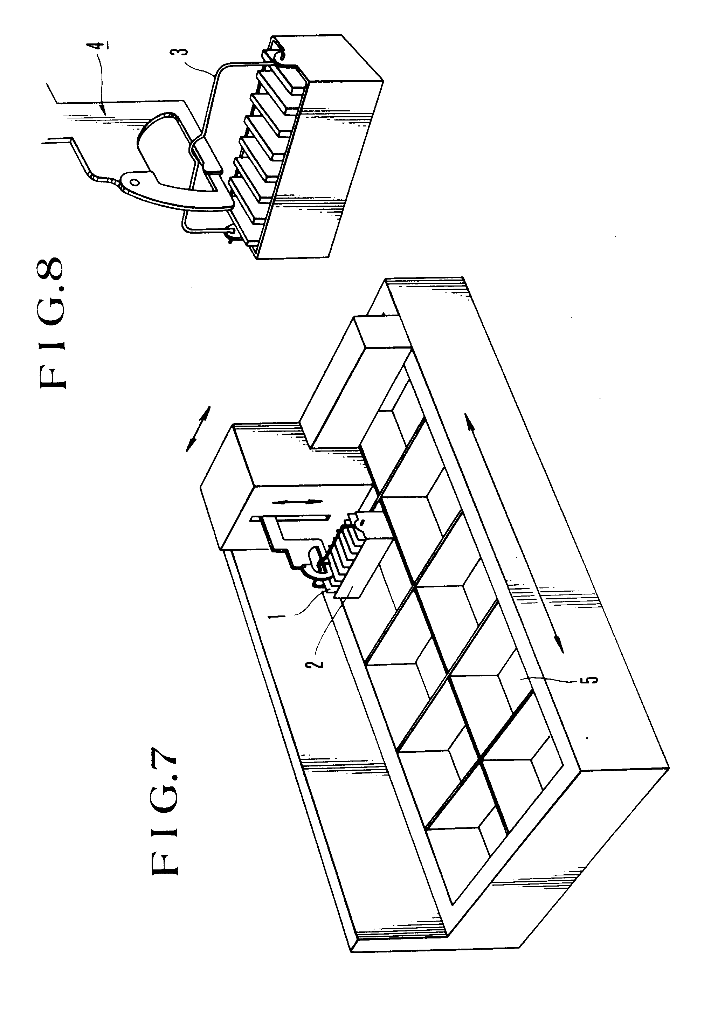

Another example of a conventional staining apparatus is described below with reference to Figures 7 and 8. However, such a conventional staining apparatus suffers from the following problems.

**Table 1**

| Procedures of H.E. Staining of Human Tissue Specimens | | |
|---|---|---|
| Step | Time | Chemical Solution |
| 1 | 1 min | xylene (1) |
| 2 | 1 min | xylene (2) |
| 3 | 3 sec | alcohol (1) |
| 4 | 3 sec | alcohol (2) |
| 5 | 3 sec | alcohol (3) |
| 6 | 2 min 3 sec | washing with running water |
| 7 | 3 min | distilled water (1) |
| 8 | 5 min | Carazzi hematoxylin |
| 9 | 2 min | washing with running water |
| 10 | 3 min | distilled water (2) |
| 11 | 3 sec | HCl-alcohol |
| 12 | 2 min | washing with running water |
| 13 | 3 min | distilled water (3) |
| 14 | 10 sec | 80% alcohol |
| 15 | 10 sec | 80% alcohol |
| 16 | 1 min | eosin |
| 17 | 8 min | washing with running water |
| 18 | 3 min | distilled water (4) |
| 19 | 30 sec | alcohol (4) |
| 20 | 30 sec | alcohol (5) |
| 21 | 30 sec | alcohol (6) |
| 22 | 1 min | xylene (3) |
| 23 | 1 min | xylene (4) |
| 24 | end | |

### Problem 1:

Conventionally, the staining slide holder basket has to be attached manually to the clamp member of the automatic staining apparatus. In other words, an operator attaches the holder basket when the clamp member is located at the basket attaching station and removes it when the clamp member is located at the removing station. Therefore, the operator must spend considerable time waiting until the attaching and removing operations can be performed, and so only a low efficiency can be achieved.

### Problem 2:

Since the basket has to be manually attached to and removed from the clamp member, it has not been possible automatically to remove the basket from one clamp member and attach it to another at an intermediate stage of the staining process or inside the staining apparatus. Accordingly, the apparatus normally includes only one clamp member and the staining work rate is low. If the number of staining steps is increased, this problem becomes all the more critical.

### Problem 3:

After treatment in a chemical solution, the basket is raised from the chemical solution container and is moved to the next chemical solution container. However, adhering chemical solution cannot be removed sufficiently from the basket in the conventional staining apparatus. Therefore, the remaining chemical solution from the previous treatment mixes into the next chemical solution container and the composition of the chemical solution changes gradually, thus affecting the staining. To solve this problem, the chemical solution must be renewed frequently. The staining apparatus cannot be used while the chemical solutions are being renewed, and the overall utilisation of the apparatus drops.

### Problem 4:

Since the shape and dimensions of a slide holder basket used for staining are different from those of a slide holder basket used for sealing, it has been necessary manually to remove the secondary slide glass specimens from the staining slide holder basket and to mount them, again manually, in the sealing slide holder basket for sealing. As a result, the efficiency of preparation of the slide specimens is low.

It is therefore a principal object of the present invention to provide an automatic staining apparatus in which a basket can automatically be attached to and removed from a clamp member, so as to solve or mitigate problem 1, described above.

Accordingly, this invention provides an automatic staining apparatus for use in staining a number of slide specimens, which apparatus comprises a slide holder basket for the slide specimens, and a clamp member for carrying the slide holder basket and movable to advance the basket through the processing steps of the apparatus from a loading port to a discharge port, which apparatus is characterised by the clamp member comprising a clamp member board, two spaced fingers movably mounted on the clamp member board and each having a projecting finger tip portion, a pair of finger receiving plates, mounted on the board in a spaced-apart manner and each having a hole for receiving the finger tip of an associated finger; and an automatic finger driving mechanism for moving said two fingers towards and away from their associated finger receiving plates, e apparatus further being characterised by the slide holder basket having engagement members on opposed sides thereof, the upper portions of each engagement member having a through hole for receiving a finger tip of the clamp member, and the distance between said upper portions permitting the location of each upper portion between a finger and finger receiving plate respectively of the clamp member, whereby the clamp member may be engaged with the basket by separating the fingers from their respective associated plates, positioning the clamp member over the engagement members and then driving the fingers to pass the finger tips through the holes in the engagement members and into the plates.

A further object of a preferred aspect of the present invention is to provide a staining apparatus in which the chemical solution adhering to a basket after dipping in the solution can be removed, so as to solve or mitigate problem 3. To this end, the apparatus may include a tilting mechanism for tilting the clamp member, operable to tilt the clamp member and a held slide holder basket after the immersion of the basket in chemical solutions to promote the draining of the chemicals therefrom.

A further object of a preferred form of this invention is to provide an automatic staining apparatus which is able to operate at a relatively high rate, allowing the staining of a large number of slide specimens simultaneously within a short period of time. To this end, the staining apparatus may be characterised by the provision of n clamp members where n ≧ 2, (n - 1) relay stations whereat a slide holder basket may be deposited by one clamp member and picked up by another, the (n - 1) relay stations being disposed between a number of chemical solution containers, and the first of said clamp members being arranged to advance a basket through a zone ranging from the loading port to the first relay station, the i-th clamp member being arranged to advance a basket through a zone ranging from the (i - 1)th relay station to the i-th relay station [with the proviso that 2 ≦ i ≦ (n - 1)] and the n-th clamp member being arranged to advance a basket through a zone ranging from the (n - 1)th relay station to said discharge port, whereby n slide holder baskets may be processed substantially at the same time but independently of one another.

This preferred form of the invention in effect has at least two clamp members, to permit the staining of at least two slide holder baskets at the same time, by automatically operating these clamp members to advance the baskets through the apparatus, with each basket being transferred from one clamp member to the other at the relay station.

This invention also provides a novel slide holder basket which can eliminate the necessity of withdrawal and rearrangement of the slides between the staining step and the sealing step, which basket can automatically be attached to and removed from a clamp member of the automatic staining apparatus, so as to solve or mitigate problem 4, above.

By way of example only, one specific embodiment of an automatic staining apparatus of this invention will now be described in detail, reference being made to the accompanying drawings, in which:-
Figure 1 is a perspective view of the embodiment of automatic staining apparatus of this invention;
Figure 2(a) is a perspective view of a slide holder basket used in the automatic staining apparatus of the present invention;
Figure 2(b) shows a support member;
Figure 3 shows the slide holder basket and a clamp member immediately before engagement or immediately after release;
Figure 4(a) shows the slide holder basket and the clamp member during engagement or immediately before release;
Figure 4(b) shows an engagement member when viewed from one side;
Figures 5(a) and 5(b) are explanatory views of a mechanism for inclining the clamp member;
Figure 6 is a schematic view of an overall apparatus having two robot mechanisms each having a clamp member, for simultaneous operation;
Figure 7 is a perspective view of a conventional automatic staining apparatus; and
Figure 8 is a perspective view of a conventional basket for slide staining, and a clamp member therefor.

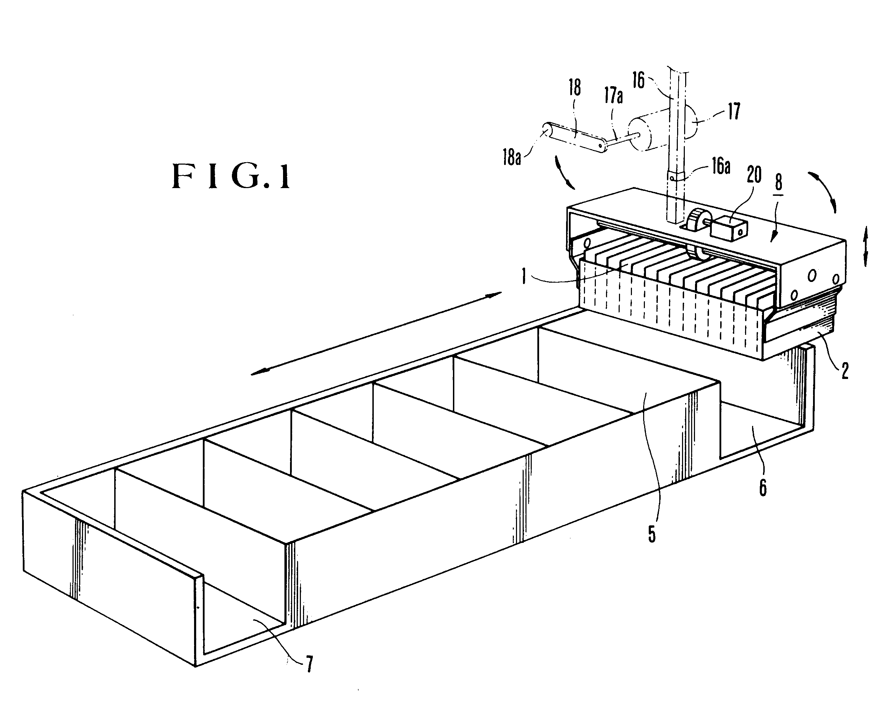

Figure 1 is a schematic view of the embodiment of the automatic staining apparatus of this invention. The apparatus has at its right hand end a loading port 6 for loading a slide holder basket 2 wherein primary slide specimens 1 to be stained are mounted, and a large number of chemical solution containers 5 are aligned with the loading port 6 in a transverse direction. (In Figure 1, the number of chemical solution containers shown is smaller than would be present in an actual example). Chemical solutions such as xylene, alcohol, Carazzi hematoxylin, distilled water, etc. are placed in each chemical solution container, depending on the object being stained. A discharge port 7 for withdrawing the slide holder basket after the completion of staining is disposed at the left hand end of the apparatus.

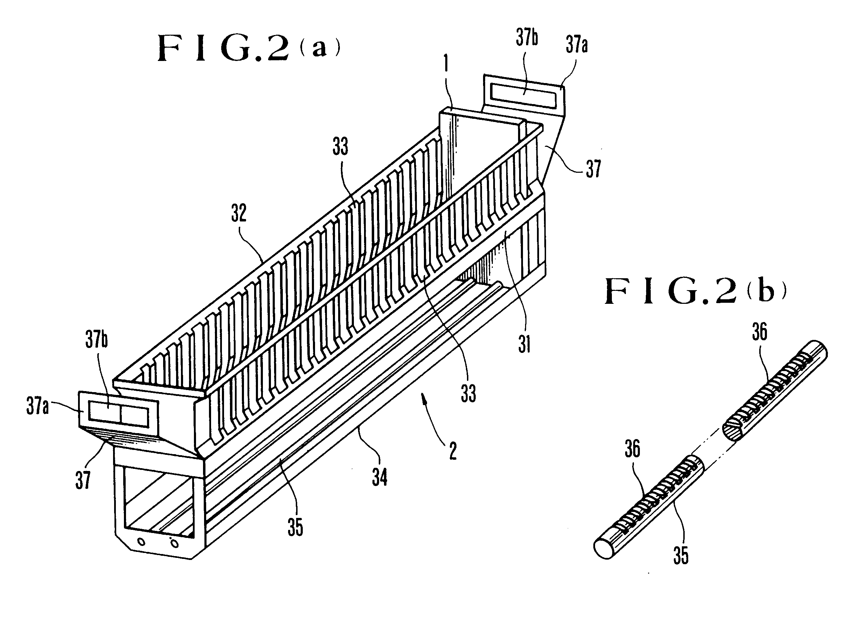

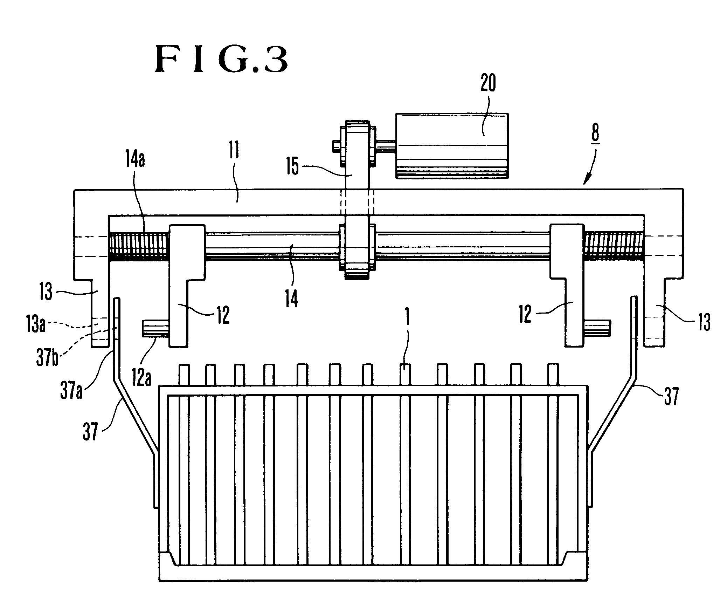

The slide holder basket 2 of the automatic staining apparatus will now be described in detail, referring to Figure 2 which is a perspective view thereof. Grooves 33 are formed on the front and back surfaces 31 and 32 in order to permit a large number of slide specimens 1 to be mounted in parallel, with specified spaces between them. A support member 35 (Figure 2(b)) is disposed at the bottom 34 in order to prevent the slide specimens 1 from falling from the slide holder basket and to obtain sufficient mechanical strength for the slide holder basket. This support member 35 may be provided with teeth 36 corresponding to the grooves 33 on the front and back surfaces 31 and 32, or may be smooth, without any teeth. In the latter case the slide specimens will still be held equidistantly and in parallel, by the grooves on the front and back surfaces. Engagement members 37, each for automatic engagement with and disengagement from a clamp member 8 (Figure 3) of the staining apparatus, are fixed on both side surfaces of the basket. The upper end portion 37a of each engagement member 37 is disposed at a given distance from the adjacent side surface and has a through-hole 37b of a size sufficient for the tip of a finger 12a of the clamp member to pass therethrough when the clamp member is to be engaged with the basket. Therefore, automatic engagement and disengagement between the upper end portion 37a and the clamp member 8 of the automatic staining apparatus is possible, and accidental release of the slide holder basket from the clamp member 8 can be prevented.

There is no particular limitation on the material of the slide holder basket: any material may be used so long as it does not chemically react with the staining solutions and sealing agents. From the aspect of the cost and so on, it is preferred to use SUS 304 stainless steel or Teflon.

The shape and dimensions of the slide holder basket are substantially the same as those of known slide holder baskets for sealing. Accordingly, it is not necessary to remove the slide specimens after the staining step and to place them in a sealing basket for the sealing step.

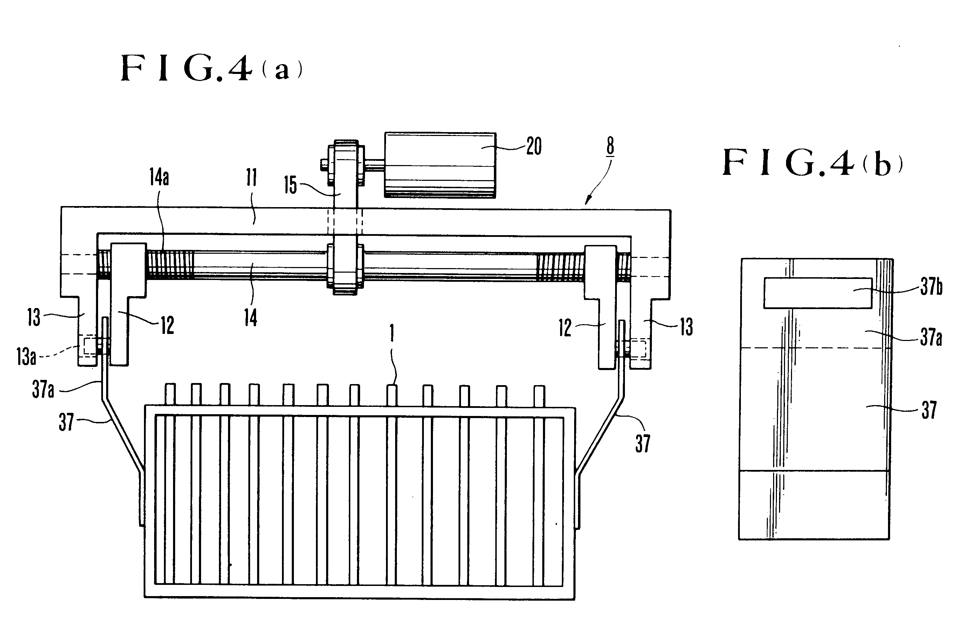

The engaging and disengaging operations of the clamp member 8 with the slide holder basket 2 will now be described. An operator may place the slide holder basket on the loading port 6, so long as the clamp member 8 is not blocking access. When the clamp member 8 is above the loading port 6, the clamp 8 lowers automatically and each finger 12 of the clamp member 8 then lies inside the upper end portion 37a of the engagement members 37 of the slide holder basket 2, while associated finger receiving plates 13 of the clamp member 8 lie outside the respective upper end portions 37a. Subsequently, the fingers 12 are moved to cause the finger tips 12a to pass through the respective through-holes 37b and engage with finger receiving holes 13a formed in the respective finger receiving plates 13. Thus the clamp member 8 is completely engaged with the slide holder basket 2, as shown in Figure 4.

Figures 3 and 4 exemplify this clamp mechanism. The finger receiving plate 13 is fixed to a clamp member board 11 and each finger 12 is threaded on a screwed portion 14a of a shaft 14 rotatably mounted in the finger receiving plates 13. The two screwed portions 14a are threaded in the opposite senses - for example, if the screwed portion on the right hand side is right-handed, the screwed portion on the left-hand side is left-handed. Therefore, when the rotary shaft 14 is rotated, the right- and left-hand fingers 12 move in opposite senses, towards or away from each other depending upon the direction of rotation of the shaft. A motor 20 is coupled by a belt 15 to the shaft 14, to rotate the shaft.

While kept in engagement, the clamp member 8 and the slide holder basket 2 are moved to lie above a specified chemical solution container 5, and are then lowered so that carried slide specimens 1 are dipped into the chemical solution for a given period, whilst being agitated, preferably by vibrating the clamp member vertically to ensure uniform treatment. After the treatment is complete, the clamp member 8 and the slide holder basket 2 are lifted.

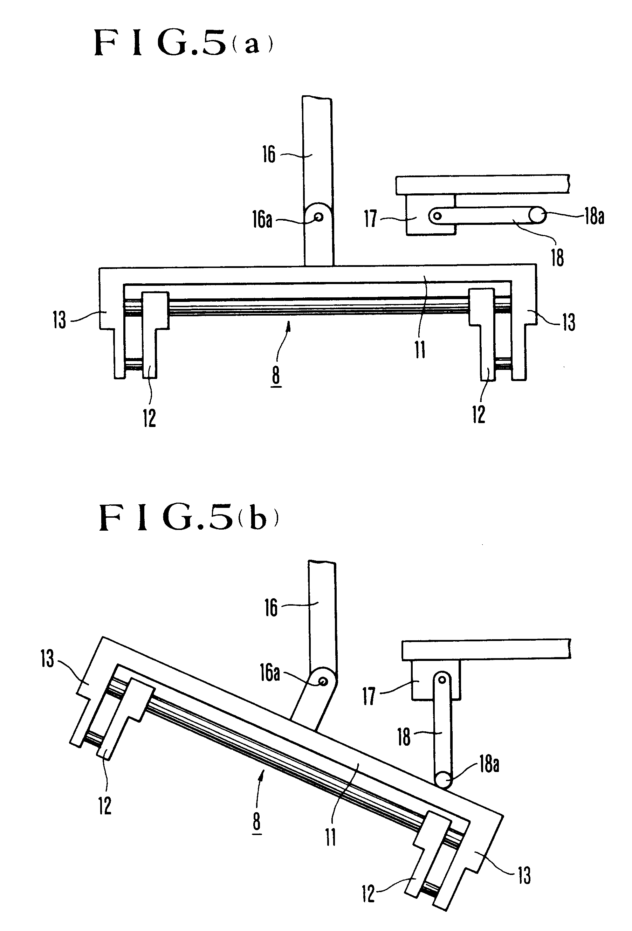

When the clamp member 8 is raised, it is preferably tilted to shake off the chemical solution adhering to the slide specimen, and so on, to minimise degradation of the next chemical solution. The basket tilting mechanism used in this embodiment (shown in broken lines in Figure 1) will be described with reference to Figures 5(a) and 5(b). The clamp member 8 is pivoted by pin 16a to a support 16. A motor 17 is fixed at a suitable position and has an arm 18 fixed to the motor shaft 17a (see Figure 1) for rotation through a specified angle. Normally, the arm 18 is not in contact with the clamp member board 11 (Figure 5a). When, however, the arm 18 is rotated by the motor 17, the arm 18 comes into contact with the clamp member board 11, and causes the clamp member 8 to rotate about pin 16a, so tilting the clamp member 8 (Figure 5b). Preferably, a roller 18a is fitted to the tip of the arm 18 in order to reduce friction with the board. The angle of inclination of the clamp member can be varied by adjusting the position of the motor 17, the position of the pin 16a on the support 16, and the length and rotation angle of the arm 18, but an angle of inclination of 20° to 45° should suffice. The motor 17 may be controlled to keep the clamp member 8 at its maximum tilting angle for a given period of time. The motor may also be controlled to perform a particular tilting pattern for the clamp member. The chemical solution can be removed sufficiently either by keeping the clamp member for a given period at its maximum tilting angle, or by inclining the clamp member from the horizontal position to the maximum tilting angle, and then decreasing the angle and increasing it again to the maximum tilting angle. The arm 18 is moved away from the clamp member board 11 by reversing the motor 17 when the inclination is completed, and the clamp member returns to the horizontal position.

Unlike the prior art, since the basket is engaged with the clamp member at its two sides, the basket will be inclined with the clamp member at all times. So long as the clamp member 8 remains engaged with the slide holder basket 2, the basket will be moved to lie above a specified chemical solution container 5, and then be lowered so that the slide specimens 1 are dipped into the chemical solution for a given time. After the chemical solution treatment is completed, the basket will be raised to lie above the chemical solution container 5, will be stopped temporarily there and then inclined to allow the chemical solution to run off.

After the completion of staining, the clamp member 8 will lie above the discharge port 7, whereat the clamp member 8 is lowered to place the slide holder basket 2 on the bottom plate of the discharge port 7. Then, the clamp member 8 is automatically released from the basket, and is raised to leave the slide holder basket 2 at the discharge port 7.

With the arrangement of this invention, it is no longer necessary for an operator to stand by when the slide holder basket is engaged with and disengaged from the clamp member, as has been necessary with the prior devices. Therefore, the operator does not have to waste time whilst the apparatus processes slides, and the rate of operation can be improved.

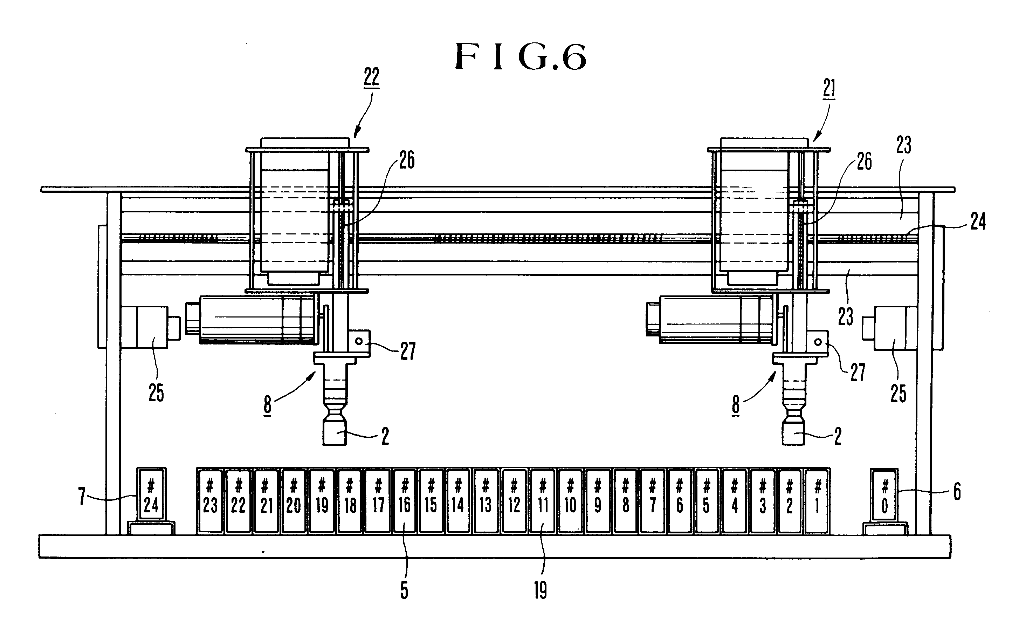

In Figure 6, there is shown an automatic slide processing apparatus employing a number (and at least two as shown in Figure 6) robots each fitted with a clamp member 8, to allow automatic handling of slide baskets.

The robots 21 and 22 are moved transversely by a driving mechanism consisting of a guide rail 23, a feed screw 24 and an X-axis motor 25. It is possible to readily modify the mechanism so that the robots can be driven independently.

Each robot has a clamp member 8 carried on a vertical driving mechanism including a feed screw 26 and a Y-axis motor 27.

Twenty-three chemical solution containers (#1 - #23) are aligned transversely between a loading port 6 and a discharge port 7. A slide holder basket 2 may be placed temporarily in container 19 (referred to herein as a 'relay station') disposed between the chemical solution containers #10 and #12. The position of the relay station can be changed in accordance with a program, and the relay station container may or may not contain a chemical solution, as required.

The first robot 21 is used over a zone ranging from the loading port 6 to the relay station 19, and the second robot 22 is used over a zone ranging from the relay station 19 to the discharge port 7.

When the chemical solution treatment in container #10 is completed, the first clamp member 8 comes above the relay station 19, then lowers and releases automatically the basket 2 when the slide holder basket 2 is supported by the relay station 19.

After leaving the basket 2 at the relay station 19, the first robot moves back to the loading port 6 to pick up another basket. Meanwhile, the second robot 22 comes above the relay station, and then is lowered and automatically engages with the basket 2 at the relay station 19. Thereafter, the chemical solution treatments of containers #12 to #23 are carried out. When all of the chemical solution treatments are over, the second robot 22 releases automatically the basket 2 at the discharge port 7 and then returns to the relay station 19 in order to pick up the next basket thereat. In this manner, staining can be carried out with two baskets at the same time but independently of each other, by use of the first and second robots 21 and 22. Therefore, the rate of operation of the staining apparatus is substantially doubled.

Referring now to Figures 7 and 8, there is shown a prior art (or conventional) staining apparatus which will briefly be described here for comparison purposes.

In order to stain a large number of primary glass slide specimens at the same time, a staining slide holder basket 2 (a conventional staining slide holder basket is shown schematically in Fig. 8) is constructed to carry a large number of slide glasses 1. Sometimes, staining is carried out with two such baskets aligned side by side. Each basket has a handle 3 which is hooked on a clamp member 4 of the staining apparatus. This clamp member 4 is attached to the basket 2 manually at a basket attaching station of the staining apparatus and is removed manually at a basket removing station. When the handle of the basket has been hooked on the clamp member 4, the clamp member can be moved both transversely and longitudinally to position the basket over a specified chemical solution container 5. The clamp member 4 can then be lowered to dip the primary slide specimens 1 mounted in the basket 2 into the chemical solution for a given period. Thereafter, the clamp member is raised. The basket may be shaken up and down while the primary slide specimens are dipped into the chemical solution in order to effect uniform treatment.

Staining has been carried out by repeating the above procedures.

## Claims

1. An automatic staining apparatus for use in staining a number of slide specimens, which apparatus comprises a slide holder basket (2) for the slide specimens (1), and a clamp member (8) for carrying the slide holder basket (2) and movable to advance the basket (2) through the processing steps of the apparatus from a loading port (6) to a discharge port (7); the clamp member (8) comprising a clamp member board (11), two spaced fingers (12) movably mounted on the clamp member board (11) and each having a projecting finger tip portion (12a), a pair of finger receiving plates (13), mounted on the board (11) in a spaced-apart manner and each having a hole (13a) for receiving the finger tip (12a) of an associated finger (12), and an automatic finger driving mechanism (14,15,20) for moving said two fingers (12) towards and away from their associated finger receiving plates (13); the slide holder basket (2) having an engagement member (37) on opposed sides thereof, the upper portions (37a) of each engagement member (37) having a through hole (37b) for receiving a finger tip (12a) of the clamp member (8) and the distance between said upper portions (37a) permitting the location of each upper portion (37a) between a finger (12) and finger receiving plate (13) respectively of the clamp member (8), whereby the clamp member (8) may be engaged with the basket by separating the fingers (12) from their respective associated plates (13), positioning the clamp member (8) over the engagement members (37) and then driving the fingers (12) to pass the finger tips (12a) through the holes (37b) in the engagement members (37) and into the plates (13).

2. An automatic staining apparatus according to claim 1, further characterised in that the automatic finger driving mechanism comprises a shaft (14) rotatably supported in the two finger receiving plates (13) and having two screwed portions (14a) which are threaded in mutually opposite directions, and a motor (20) for rotating the shaft (14) directly or indirectly through a belt (15).

3. An automatic staining apparatus according to claim 1, and further characterised in that there is a tilting mechanism (17,18) for tilting the clamp member (8), operable to tilt the clamp member (8) and a held slide holder basket (2) after the immersion of the basket in chemical solutions to promote the draining of the chemicals therefrom.

4. An automatic staining apparatus according to claim 3, further characterised in that the tilting mechanism comprises a joint (16a) supporting said clamp member (8) from above permitting the pivoting thereof, a motor (17) disposed above the clamp member (8), and an arm (18) having one end thereof fixed to a shaft driven by the motor (17) so that the other end may come into contact with the clamp member board (11) to cause the clamp member (8) to pivot around said joint.

5. An automatic staining apparatus according to claim 3 or claim 4, characterised in that the tilting mechanism is arranged to increase the inclination of said clamp member (8) and a carried slide holder basket from the horizontal position to a maximum tilting angle, then to reduce the tilting angle and then to increase the tilting angle once more to the maximum tilting angle.

6. An automatic staining apparatus according to any of claims 3 to 5, characterised in that the tilting mechanism may tilt the clamp member (8) to a maximum tilt angle of from about 20° to about 45°.

7. An automatic staining apparatus according to any of claims 1 to 6, and further characterised in that there are provided n clamp members, where n ≧ 2, (n - 1) relay stations whereat a slide holder basket may be deposited by one clamp member (8) and picked up by another, the (n - 1) relay stations being disposed between a number of chemical solution containers, and the first of said clamp members being arranged to advance a basket through a zone ranging from the loading port (6) to the first relay station, the i-th clamp member being arranged to advance a basket through a zone ranging from the (n - 1)th relay station to the i-th relay station [with the proviso that 2 ≦ i ≦ (n - 1)] and the n-th clamp member being arranged to advance a basket through a zone ranging from the (n - 1)th relay station to said discharge port (7), whereby n slide holder baskets may be processed substantially at the same time but independently of one another.

8. An automatic staining apparatus according to claim 7, characterised in that two clamp members (8) are provided.

9. An automatic staining apparatus according to any of the preceding claims, characterised in that the slide holder basket (2) for slide specimens (1) has substantially the same size as conventional slide holder baskets for sealing apparatus.

## Patentansprüche

1. Automatische Färbevorrichtung zum Färben von auf Objektträgern angeordneten Proben, mit einem Objektträgerhaltekorb (2) für die Objektträgerproben (1), und mit einem Klemmelement (8) zum Tragen des Objektträgerhaltekorbes (2), das beweglich ist, um den Korb (2) durch die Verfahrensschritte der Vorrichtung von einer Ladeöffnung (6) bis zu einer Entladeöffnung (7) vorwärts zu bewegen; wobei das Klemmelement (8) einen Klemmelementträger (11) aufweist, weiter zwei voneinander beabstandete Finger (12) die beweglich auf dem Klemmelementträger (11) angeordnet sind und die jeder einen hervorstehenden Fingerspitzenabschnitt (12a) aufweisen, weiter ein Paar von Fingeraufnahmeplatten (13), die auf dem Träger (11) in beabstandeter Weise angeordnet sind und jede eine Bohrung (13a) zum Aufnehmen der Fingerspitze (12a) eines zugehörigen Fingers (12) aufweisen, und mit einem automatischen Fingerantriebsmechanismus (14, 15, 20) zum Bewegen der beiden Finger (12) in Richtung auf die zugehörigen Fingeraufnahmeplatten (13) zu und von diesen weg; wobei der Objektträgerhaltekorb (12) auf einander gegenüberliegenden Seiten ein Eingriffselement (37) hat und die oberen Bereiche (37a) eines jeden Eingriffselements (37) eine Durchgriffsöffnung (37b) zum Aufnehmen einer Fingerspitze (12a) des Klemmelements (8) aufweisen und der Abstand zwischen den oberen Bereichen (37a) die Anordnung eines jeden oberen Bereichs (37a) zwischen einem Finger (12) und einer Fingeraufnahmeplatte (13) des Klemmelements (8) erlaubt, wobei das Klemmelement (8) mit dem Korb verbunden werden kann, indem die Finger (12) von ihren zugehörigen Platten (13) abgenommen werden, das Klemmelement (8) über den Eingriffselementen (37) angeordnet wird und dann die Finger (12) angetrieben werden, um die Fingerspitzen (12a) durch die Öffnungen (37b) in den Eingriffselementen (37) und in die Platten (13) zu treiben.

2. Automatische Färbevorrichtung nach Anspruch 1, weiter dadurch gekennzeichnet, daß der automatische Fingerantriebsmechanismus eine drehbar in den beiden Fingeraufnahmeplatten (13) gelagerte Welle (14) aufweist, die zwei Schraubenbereiche (14a) aufweist, deren Gewinde in entgegengesetzer Drehrichtung verlaufen, sowie weiter einen Motor (20) zum direkten oder indirekten Drehen der Welle (14) über einen Treibriemen (15).

3. Automatische Färbevorrichtung nach Anspruch 1, weiter gekennzeichnet durch einen Kippmechanismus (17, 18) zum Kippen des Klemmelements (8), verwendbar dazu, das Klemmelement (8) und einen gehaltenen Objektträgerhaltekorb (2) nach dem Eintauchen des Korbes in chemische Lösungen zu kippen, um das Abfließen der Chemikalien zu unterstützen.

4. Automatische Färbevorrichtung nach Anspruch 3, weiter dadurch gekennzeichnet, daß der Kippmechanismus eine Verbindung (16a) aufweist, die das Klemmelement (8) von oben so lagert, daß es verschwenken kann, daß ein Motor (17) oberhalb des Klemmelements (8) angeordnet ist, und daß ein Hebel (18) mit einem Ende so mit einer von dem Motor (17) angetriebenen Welle verbunden ist, daß das andere Ende mit dem Klemmelementträger (11) in Berührung kommen kann, so daß das Klemmelement (8) um die Verbindung verschwenkt wird.

5. Automatische Färbevorrichtung nach Anspruch 3 oder 4, dadurch gekennzeichnet, daß der Kippmechanismus so angeordnet ist, daß die Neigung des Klemmelements (8) und eines gehaltenen Objektträgerhaltekorbes von einer horizontalen Lage bis zu einem maximalen Kippwinkel gesteigert wird, dann der Kippwinkel reduziert wird und dann ein weiteres Mal bis zum maximalen Kippwinkel gesteigert wird.

6. Automatische Färbevorrichtung nach einem der Ansprüche 3 bis 5, dadurch gekennzeichnet, daß der Kippmechanismus das Klemmelement (8) bis zu einem maximalen Kippwinkel von etwa 20° bis etwa 45° kippen kann.

7. Automatische Färbevorrichtung nach einem der Ansprüche 1 bis 6, weiter dadurch gekennzeichnet, daß n Klemmelemente vorgesehen sind, wobei n ≧ 2, daß (n - 1) Relaisstationen vorgesehen sind, an denen der Objektträgerhaltekorb durch ein Klemmelement (8) abgestellt und durch ein weiteres aufgenommen werden kann, wobei die (n - 1) Relaisstationen zwischen einer Anzahl von Behältern für chemische Lösungen angeordnet sind, und das erste der genannten Klemmelemente angeordnet ist, um einen Korb durch eine Zone zu bewegen, die von der Ladeöffnung (6) bis zur ersten Relaisstation reicht, wobei das i-te Klemmelement angeordnet ist, um einen Korb durch eine Zone zu bewegen, die von der (n - 1)ten Relaisstation bis zu der i-ten Relaisstation reicht [unter der Voraussetzung, daß 2 ≦ i ≦ (n - 1)] und das n-te Klemmelement angeordnet ist, um einen Korb durch eine Zone zu bewegen, die von der (n - 1)sten Relaisstation bis zu der genannten Entladeöffnung (7) reicht, wobei n Objektträgerhaltekörbe im wesentlichen gleichzeitig aber unabhängig voneinander verfahren werden können.

8. Automatische Färbevorrichtung nach Anspruch 7, dadurch gekennzeichnet, daß zwei Klemmelemente (8) vorgesehen sind.

9. Automatische Färbevorrichtung nach einem der vorhergehenden Ansprüche, dadurch gekennzeichnet, daß der Objektträgerhaltekorb (2) für Objektträgerproben (1) im wesentlichen die gleiche Größe aufweist wie herkömmliche Objektträgerhaltekörbe für eine Versiegelungsvorrichtung.

## Revendications

1. Dispositif de coloration automatique pour colorer plusieurs plaques spécimens, lequel dispositif comprend un panier porte-plaques (2) pour les plaques spécimens (1), et un organe de bridage (8) pour porter le panier porte-plaques (2), cet organe étant mobile pour faire avancer le panier (2) à travers les étapes de traitement du dispositif à partir d'un port de chargement (6) jusqu'à un port de déchargement (7) ; l'organe de bridage (8) comprenant un tablier (11), deux doigts espacés (12) montés de façon mobile sur le tablier de l'organe de bridage (11), et possédant chacun une partie saillante en bout de doigt (12a), une paire de flasques (13) récepteurs des doigts, montés à distance l'un de l'autre sur le tablier (11) et possédant chacun un trou (13a) pour recevoir le bout de doigt (12a) d'un doigt associé (12), et un mécanisme (14, 15, 20) automatique d'entraînement des doigts, pour rapprocher et éloigner lesdits deux doigts (12) de leurs flasques récepteurs associés (13) ; le panier porte-plaques (2) possédant un organe de prise (37) sur des côtés opposés dudit panier, la partie supérieure (37a) de chaque organe de prise (37) possédant un trou traversant (37b) pour recevoir un bout de doigt (12a) de l'organe de bridage (8) et la distance entre lesdites parties supérieures (37a) permettant de positionner chaque partie supérieure (37a) entre respectivement un doigt (12) et un flasque récepteur de doigt (13) de l'organe de bridage (8), de sorte que l'organe de bridage (8) peut être mis en prise avec le panier en séparant les doigts (12) de leurs flasques (13) respectivement associés, en positionnant l'organe de bridage (8) au-dessus des organes de prise (37) puis en entraînant les doigts (12) pour introduire les bouts de doigts (12a) à travers les trous (37b) des organes de prise (37) et à l'intérieur des flasques (13).

2. Dispositif de coloration automatique selon la revendication 1, caractérisé de plus en ce que le mécanisme d'entraînement automatique des doigts comprend un arbre (14) supporté avec possibiité de rotation dans les deux flasques récepteurs de doigt (13) et possédant deux parties (14a) filetées en sens inverse l'une de l'autre, et un moteur (20) pour entraîner en rotation l'arbre (14) directement ou indirectement par l'intermédiaire d'une courroie (15).

3. Dispositif de coloration automatique selon la revendication 1, caractérisé en ce qu'il est en outre prévu un mécanisme de basculement (17, 18) pour incliner l'organe de bridage (8), utilisable pour incliner l'organe de bridage (8) et un panier porte-plaques qu'il retient après l'immersion du panier dans des solutions chimiques pour favoriser l'évacuation des produits chimiques.

4. Dispositif de coloration automatique selon la revendication 3, caractérisé de plus en ce que le mécanisme de basculement comprend une articulation (16a) supportant par en haut ledit organe de bridage (8) pour lui permettre de pivoter, un moteur (17) disposé au-dessus de l'organe de bridage (8), et un bras (18) ayant une extrémité fixée à un arbre actionné par le moteur (17) de façon que l'autre extrémité peut venir en contact avec le tablier (11) de l'organe de bridage pour faire pivoter l'organe de bridage (8) autour de ladite articulation.

5. Dispositif de coloration automatique selon la revendication 3 ou 4, caractérisé en ce que le mécanisme de basculement est disposé pour augmenter l'inclinaison dudit organe de bridage (8) et d'un panier porte-plaques qu'il porte, à partir de la position horizontale jusqu'à un angle d'inclinaison maximum, puis pour réduire l'ange d'inclinaison et puis pour augmenter encore une fois l'angle d'inclinaison jusqu'à l'angle d'inclinaison maximum.

6. Dispositif de coloration automatique selon l'une des revendications 3 à 5, caractérisé en ce que le mécanisme de basculement peut incliner l'organe de bridage (8) jusqu'à un angle d'inclinaison maximum d'environ 20° à environ 45°.

7. Dispositif de coloration automatique selon l'une des revendications 1 à 6, et caractérisé de plus en ce qu'il comprend n organes de bridage, où n ≧ 2, (n-1) stations relais auxquelles un porte-plaques peut être déposé par un permier organe de bridage (8) et récupéré par un autre, les (n-1) stations relais étant disposées entre plusieurs conteneurs de solution chimique, et le premier desdits organes de bridage étant disposé pour faire avancer un panier à travers une zone s'étendant du port de chargement (6) jusqu'à la première station relais, le i-ième organe de bridage étant disposé pour faire avancer un panier à travers une zone s'étendant de la (i-1)-ième station relais jusqu'à la i-ième station relais (avec la condition 2 ≦ i ≦ (n-1)) et le n-ième organe de bridage étant disposé pour faire avancer un panier à travers une zone s'étandant de la station relais (n-1) audit port de déchargement (7), de sorte que n paniers porte-plaques peuvent être traités sensiblement en même temps mais indépendamment l'un de l'autre.

8. Dispositif de coloration automatique selon la revendication 7, caractérisé en ce qu'il comprend deux organes de bridage (8).

9. Dispositif de coloration automatique selon l'une quelconque des revendications précédentes, caractérisé en ce que le panier porte-plaques (2) pour plaques échantillons (2) a sensiblement la même taille que des paniers porte-plaques classiques pour dispositif de scellement.
